# EUROPEAN PATENT SPECIFICATION

(11) **EP 2 736 778 B1**
(45) Date of publication and mention of the grant of the patent: **18.09.2019**
(21) Application number: 12759227.7
(22) Date of filing: 24.07.2012
(51) Int. Cl.: B60S 9/02

(54) **FOOT SUPPORT FOR JACKING MEANS**
STÜTZFUSS FÜR HEBEVORRICHTUNG
PIED DE SUPPORT POUR UN CRIC

(30) Priority: 28.07.2011 IT GE20110082
(43) Date of publication of application: 04.06.2014
(73) Proprietor: Sirtres S.r.l., 20053 Muggio' (IT)
(72) Inventor: TRES, Andrea, I-21056 Induno Olona Province of Varese (IT)
(74) Representative: Porsia, Attilio
(86) International application number: PCT/IB2012/053757
(87) International publication number: WO 2013/014608

(56) References cited:
- WO-A1-2010/100038
- DE-A1- 2 024 095
- DE-U1-202006 008 619
- US-A- 3 642 242
- US-A1- 2008 048 427
- US-B1- 6 386 586

## Description

The present invention relates to stabilizers for self-propelled cranes, truck-mounted cranes, ladders, hoists, scaffolding, steel structures or similar apparatus operating in a cantilevered way, with load capacities of up to several tonnes. In order to increase the stability of said equipment, use is made not only of counterweights but also of mechanical supports (lifting jacks, racks or hydraulic jacks) which also reduce the stresses on the suspension of the vehicles.

At the present time, the ground support feet which are used are either rigid plates (known as "pads"), which have the heads of the shanks of the mechanical supports, such as hydraulic jacks, bearing on them (although these have considerable drawbacks in that they are not always satisfactorily adaptable to the irregularities of the ground), or supporting members with feet made of plastic or polymer materials, which are more satisfactorily adaptable to any unevenness in the ground.

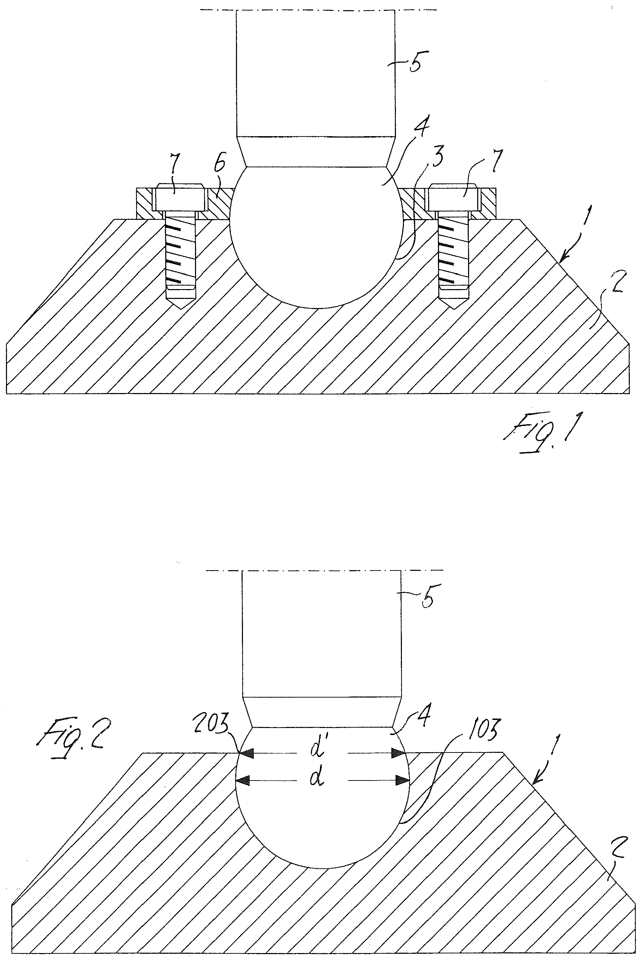

A known supporting member of the type having a foot made of plastic or polymer material, which has been found to be particularly effective, is shown in Figure 1 of the attached drawings.

With reference to this figure, the number 1 indicates the foot of plastic or polymer material. A foot of this type is generally composed of a block of frustoconical or other shape, having a base 2 made of a plastic or polymer material such as PA6 (polyamide 6). A spherical cavity 3 is formed in the foot 1, and the spherical head 4, fixed to the rod 5 of a hydraulic jack (not shown), is engaged in this cavity. The head 4 is fastened to the block 1 by means of a flange of metal or plastic material 6 made in two halves, delimiting an opening machined spherically so as to mate with the shell of the ball 4, and the flange 6 is secured stably to the foot 1 by means of bolts 7. Clearly, this type of mounting is complicated, and the operations of fitting the foot 1 on the jack 5 and removing it therefrom are time-consuming.

From D1: DE 20 24 095 A1 a support foot for stabilizers is known, comprising a substantially frustoconical box-like metallic support member with a base of larger diameter, with means for the connection to the end of a hydraulic or mechanical jack. The said support foot exhibit the same defects to which reference is made in the description of the state of the art, namely complicated mounting and time consuming operations for fitting the foot of the jack and removing it therefrom.

D2 : US 6 386 586 B1 teaches that cushioning pads are known made from plastics material which can be secured to the rest feet of the stabilizers. Again, also in this case the mounting is complex and is requesting a long work and the use of a set of tools for assembling and disassembling it.

The object of the present invention is therefore to provide a system for coupling a rod of a hydraulic jack or similar mechanical support device to a support foot which overcomes the drawbacks of the prior art devices.

This object is achieved by means of a device as claimed in Claim 1.

Further objects and advantages will be made clear by the following description, which makes reference to the attached drawings, in which:
Figure 1 is a view in diametric section, with some parts in view, of a support foot according to the prior art;
Figure 2 is a view in diametric section, with some parts in view, similar to that of Figure 1, showing a first embodiment of a support foot according to the present invention;
Figure 3 is a view in diametric section, with some parts in view, similar to those of Figures 1 and 2, showing a second embodiment of a support foot according to the present invention, and
Figure 4 is a view in side elevation of a third embodiment of a support foot according to the present invention.

In the following description, identical or corresponding parts will be identified with the same reference numerals.

Additionally, where reference is made in the following description to a hydraulic jack, it is to be understood that this device may be replaced with a jack, a rack or a similar device capable of providing suitable mechanical support.

With reference to Figure 2, the number 1 indicates the support foot, made of plastic or polymer material such as an aliphatic polyamide, for example polyamide 6. This foot is made in one piece in the form of a block of frustoconical or other shape, resting on a base 2. A spherical cavity 103 is formed in the foot 1 and extends beyond the median line of the sphere, so as to have a mouth 203 with a diameter d' which is smaller than the diameter d of the ball 4 fixed to the rod 5 of a hydraulic jack (not shown), the degree of interference between the mouth 203 and the spherical head 4 being about 0.1% to 3%. Thus the spherical head 4 can be snap-fitted through the mouth 203 into the spherical cavity 103, by exerting a pressure appropriate to the diameter of the ball and the interference between the mouth 203 and ball 4, and can also be extracted by exerting an appropriate tractive force on the head.

Thus the rods of the hydraulic jacks (or similar supporting means) of the equipment to be stabilized are engaged with the feet 1 and/or disengaged therefrom in a quick and convenient manner, without the use of tools which would be necessary, for example, for the mounting and dismounting of the feet 1 shown in Figure 1.

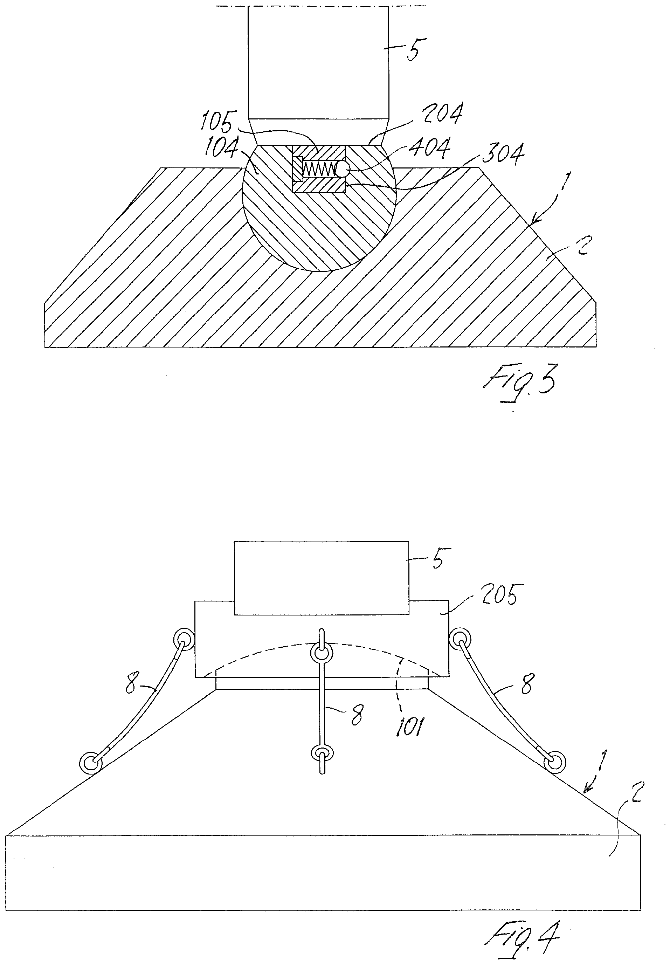

In the embodiment of the present invention shown in Figure 3, the ball 104 is incorporated in the foot 1 by co-moulding, so as to project from the upper part of the foot 1 with a flat area 204, from the centre of which there extends a slot 304 into which is fitted a fitting member 105 fixed to the end of the rod 5 of a hydraulic jack. The fitting member 105 interacts with the slot 304 using resilient retaining means, such as the ball and spring means 404, in order to fasten the rod 5 of the jack to the foot 1. Clearly, it would be possible to omit the resilient retaining means, and it would be possible for the joint configuration, instead of being male on the end of the rod 5 of the jack and female on the ball 104 as illustrated, to be male on the ball 104 and female on the end of the rod 5 of the jack, thereby ensuring the cleanness of the coupling.

In this case also, the foot 1 is fastened to the rod 5 and detached therefrom quickly and conveniently, using a degree of force or traction appropriate to the dimensions and weight of the support foot and the incorporated metal ball.

Figure 4 shows another variant of the present invention.

In this embodiment, the foot 1 has on its top a spherical dome 101, made in one piece with the material of the foot 1 and having a large bearing surface, which supports the metal spherical bearing 205 carried by the rod 5 of the jack.

The bearing 205 is connected stably to the foot 1 by links 8, and the fastening or detachment takes place between the rod of the jack and the bearing 205. Clearly, it is possible to leave the bearing 205 stably connected to the rod of the jack.

The present invention yields multiple advantages. Among other benefits, the solutions which have been described prevent water, mud or gravel from becoming trapped between the spherical head and the spherical socket, which would lead to malfunction, premature wear and unpredictable fracture under load.

## Claims

1. Support foot for stabilizers comprising a frusto-conical support member with a base of large diameter comprising means for the effective and secure but quickly and convenient disengageable connection of said foot to the end of the rod of a hydraulic or mechanical jack,
**characterized in that** the support member is made of plastic or polymer material and **in that** said means comprise a spherical socket formed in said foot and a spherical metal head having a diameter complementary to the diameter of said spherical socket fixed to the end of the rod of said hydraulic or mechanical jack, the mouth of said socket having a diameter smaller than the diameter of the spherical metal head carried by the rod of the hydraulic or mechanical jack, the said spherical metal head being connected or disconnected with snap fit without the use of tool to the spherical socket.

2. Support foot according to claim 1, wherein said plastic or polymer material of the foot is a polyamide.

3. Foot according to Claim 2, wherein said polyamide is polyamide 6.

## Patentansprüche

1. Ein Stützfuß für Hebevorrichtungen, welcher ein kegelstumpfförmiges Halteelement mit einer Basis mit großem Durchmesser umfasst, das Elemente für die effektive und sichere, aber schnell und bequem ausrückbare Verbindung des genannten Fußes mit dem Ende der Stange eines hydraulischen oder mechanischen Hebers umfasst, **dadurch gekennzeichnet, dass** das Halteelement aus Kunststoff oder Polymer-Material besteht, sowie dadurch, dass die genannten Elemente jeweils einen kugelförmigen Sockel umfassen, der sich in dem genannten Fuß befindet, und einen kugelförmigen Metallkopf mit einem Durchmesser, welcher sich mit dem Durchmesser des genannten kugelförmigen Sockels ergänzt, der jeweils am Ende der Stange des genannten hydraulischen oder mechanischen Hebers befestigt ist, wobei die Öffnung des genannten Sockels einen Durchmesser aufweist, der geringer als der Durchmesser des kugelförmigen Metallkopfs ist, welcher von der Stange des hydraulischen oder mechanischen Hebers getragen wird, und der genannte kugelförmige Metallkopf per Schnappverbindung in oder aus dem kugelförmigen Sockel ein- oder ausgerastet werden kann, ohne dass dazu Werkzeug verwendet werden muss.

2. Ein Stützfuß gemäß Anspruch 1, wobei es sich bei dem genannten Kunststoff- oder Polymer-Material des Fußes um Polyamid handelt.

3. Ein Fuß gemäß Anspruch 2, wobei das genannte Polyamid Polyamid 6 ist.

## Revendications

1. Pied de support pour stabilisateurs comprenant un élément de support tronconique avec une base de grand diamètre comprenant des moyens pour la connexion efficace et sûre, mais pouvant être désengagée rapidement et pratiquement, dudit pied à l'extrémité d'une tige d'un vérin hydraulique ou mécanique,
**caractérisé en ce que** l'élément de support est réalisé en matériau plastique ou polymère et **en ce que** lesdits moyens comprennent un logement sphérique formé dans ledit pied et une tête métallique sphérique ayant un diamètre complémentaire au diamètre dudit logement sphérique fixé à l'extrémité de la tige dudit vérin hydraulique ou mécanique, l'embouchure de dudit logement ayant un diamètre inférieur au diamètre de la tête métallique sphérique supportée par la tige du vérin hydraulique ou mécanique, ladite tête métallique sphérique étant connectée au ou déconnectée du logement sphérique par ajustement par encliquetage sans l'utilisation d'outil.

2. Pied de support selon la revendication 1, dans lequel ledit matériau plastique ou polymère du pied est un polyamide.

3. Pied selon la revendication 2, dans lequel ledit polyamide est un polyamide 6.
